# DEMANDE DE BREVET EUROPEEN

(11) **EP 0 554 509 A1**
(43) Date de publication de la demande: **11.08.1993**
(21) Numéro de dépôt: 92115758.2
(22) Date de dépôt: 15.09.1992
(51) Int. Cl.: F16K 35/06, E05B 13/00

(54) **Dispositif de verrouillage pour manette de commande de soupape**

(30) Priorité: 17.01.1992 US 822216
(71) Demandeur: ARKON SAFETY EQUIPMENT INC., Montréal, Québec H1A 1S3 (CA)
(72) Inventeur: Primeau, Mario, St-Léonard, Québec H1R 2H2 (CA); Perron, Claude, St-Boniface, Québec G0X 2LO (CA)
(74) Mandataire: Bonnetat, Christian

(57) **Abrégé**

Le dispositif de verrouillage immobilise la manette de commande de soupape (16) aussi bien en sa position fermée qu'en sa position ouverte. Il consiste en une partie mâle (22) et en une partie femelle (24). La partie mâle comprend une cavité allongée (26), afin de recevoir à plat et librement la manette de soupape (16), et un prolongement en forme de U (28), s'allongeant transversalement à partir d'une extrémité du corps principal de la partie mâle. La partie femelle définit un canal (38) permettant un engagement coulissant de la partie mâle et de la manette de soupape reliée à la partie mâle, afin de les verrouiller les uns aux autres. Un cadenas (46) barre les parties mâle et femelle en y engageant par une branche une paire d'oreilles (34, 44) en regard l'une à l'autre.

## Description

### DOMAINE DE L'INVENTION

L'invention a trait à des serrures de sécurité visant à empêcher la commande accidentelle de la manette de soupape d'une conduite de fluide.

### ÉTAT DE LA TECHNIQUE

L'écoulement de fluide dans des conduites de machines industrielles est habituellement contrôlé par une soupape de commande manuelle ayant une poignée levier saillante vers l'extérieure. Le fluide, e.g. un fluide hydraulique, est alimenté à la machine afin de lui fournir de la puissance. La poignée est installée transversalement sur la soupape au niveau d'un arbre pivotant permettant sa rotation entre une position ''ouverte'', généralement parallèle à et vis-à-vis la conduite, et une position ''fermée'', généralement orthogonale à la conduite. Dans la position fermée de la poignée, le clapet de soupape est orienté transversalement à l'axe longitudinal de la conduite, de sorte que l'on empêche tout à fait l'écoulement de fluide au travers cette section de la conduite. Dans la position ouverte de poignée, le clapet de soupape est placé axialement à la conduite, de sorte que l'écoulement de fluide se fait à peu près librement.

Lors de l'entretien de la machinerie alimentée en fluide, il est essentiel non seulement de fermer la soupape, mais également de s'assurer que la soupape demeurera fermée en tout temps. En effet, le technicien d'entretien de ces grosses machines industrielles peut subir de graves blessures entraînant des séquelles permanentes, ou même la mort, lorsque la soupape est ouverte par erreur en amont de la machinerie lors de travaux de maintenance sur cette soupape. Il est donc impératif que le protocole de maintenance de machinerie suivi par le technicien comprenne comme première étape l'installation amovible par le technicien lui-même d'une serrure de soupape sur la soupape, avant d'entamer le travail en aval sur la soupape .

Un examen de l'état de la technique révèle que de telles serrures de soupape existent déjà. De telles serrures de soupape sont proposées afin de décourager l'ouverture accidentelle de la soupape, e.g. par un autre technicien de l'usine qui n'est pas au courant que de la maintenance est en cours sur la machinerie. Cependant, ces serrures connues pour soupape ne sont pas destinées à empêcher un acte criminel visant à forcer la soupape dans le but de chercher à intentionnellement induire des blessures corporelles au technicien d'entretien. Donc, la solidité de construction de ces serrures n'a pas à être importante.

Comme exemple de telles serrures de soupape, l'on peut mentionner le brevet américain 5,003,797 délivré le 2 avril 1991 à la société W. H. Brady. Le dispositif de verrouillage de soupape de Brady comprend un corps plan unique, rigide, principal 25 ayant un organe de canal intérieur 30, à être engagé par la manette de soupape 12. Une patte solidaire divergente 26 est reliée à la partie principale 25 de la serrure. Dans la position fermée de la manette de soupape, suite à l'engagement de la poignée 12 dans le canal 30, la patte 26 vient s'appuyer à plat tangentiellement contre le corps de soupape 15 ( ce dernier est coaxial à la conduite de fluide 11). Tel qu'illustré à la figure 6 du brevet Brady, l'effet de verrouillage est obtenu en pivotant le bras 31 vers la poignée 12 et par l'engagement de la branche d'un cadenas au travers l'un des orifices 34, de façon à immobiliser par effet de coin le rebord 28 contre la conduite 11. Bien entendu, un tel dispositif de verrouillage ne permet de verrouiller la poignée de soupape 12 qu'en position fermée seulement.

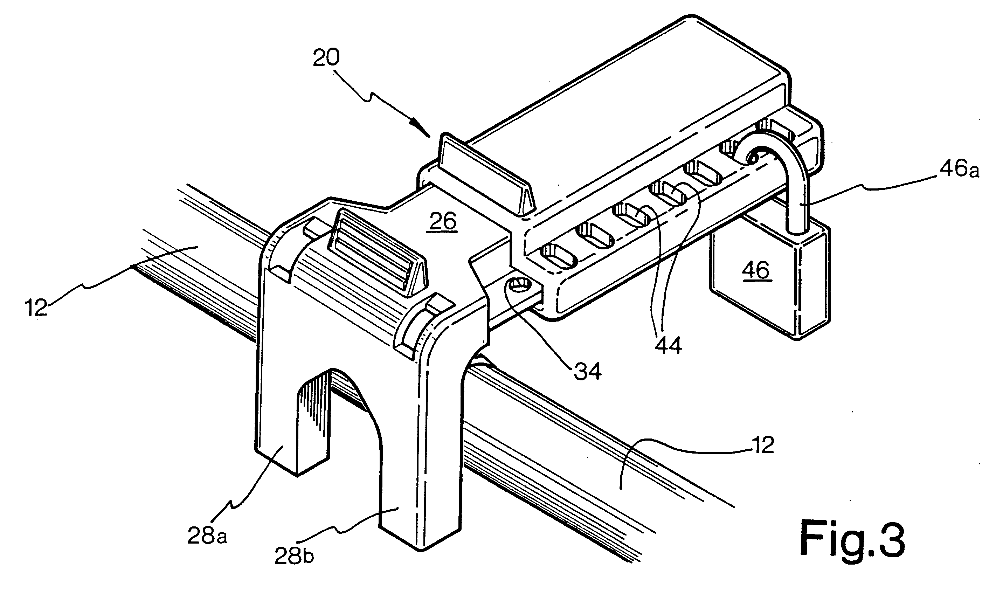

Dans le brevet américain 4,498,320 délivré en février 1985 à la société conbraco industries inc., l'on prévoit un dispositif de verrouillage de poignée de soupape, comprenant deux parties. Cette serrure de soupape permet de verrouiller la poignée aussi bien en position fermée qu'en position ouverte. Mais, tel que suggéré à la figure 3, chaque fois que la serrure en deux parties 34, 36 doit être installée sur le levier de poignée 24, un écrou 30 doit être enlevé pour ensuite être replacé de nouveau sur l'arbre rotatif de soupape, 22, du levier de manette 24. Ce n'est pas pratique.

Le brevet canadien 1,041,315 délivré en 1978 à la société Whitey Research Tool co., décrit également une serrure à poignée de valve en deux parties, laquelle permet de verrouiller la poignée de soupape aussi bien en position fermée qu'en position ouverte. Encore une fois, comme dans le brevet Conbraco, si on veut installer les deux parties 52, 54 du dispositif de verrouillage sur la poignée 56, l'écrou 16 reliant la poignée 56 à l'arbre de soupape 12 doit être enlevé, pour ensuite être replacé en position.

### BUTS DE L'INVENTION

Le but principal de l'invention est donc de prévoir une serrure de commande de soupape de conduite de fluide, qui permette de verrouiller une poignée de soupape aussi bien en position fermée qu'en position ouverte, de sorte que la serrure puisse être facilement installée sur la poignée de soupape sans avoir à démantibuler la soupape ou un élément de cette soupape.

Un but général de l'invention est de prévoir une serrure de soupape telle que ci-haut décrite, qui soit de construction simple et de coût de fabrication peu élevé.

### SOMMAIRE DE L'INVENTION

Conformément aux buts de l'invention, l'on prévoit un dispositif de verrouillage destiné à être utilisé avec une poignée à levier allongée pour la commande d'une soupape du type installée radialement sur une conduite allongée d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle, définissant un corps principal allongé destiné à engager de façon amovible une portion substantielle de ladite poignée levier sur son long;
(b) un organe femelle, définissant un organe pochette allongé, généralement fermé, ledit organe pochette ayant une ouverture à une extrémité, ledit organe mâle et ladite poignée levier engagés de façon amovible l'un avec l'autre étant destinés à être engagés de façon amovible au travers ladite ouverture et dans ledit organe pochette afin de verrouiller ladite poignée levier audit organe mâle, de sorte que ladite poignée levier devienne généralement masquée par lesdits organes mâle et femelle reliés l'un à l'autre;
(c) des moyens visant à empêcher un mouvement relatif dudit organe mâle au niveau de ladite conduite; et
(d) des moyens visant à ancrer de façon amovible lesdits organes mâle et femelle exclusivement de ladite poignée levier; caractérisé en ce que ledit dispositif de verrouillage empêche la rotation par pivotement de ladite poignée levier lorsque celle-ci est placée en l'une quelconque desdites première ou seconde positions;
et caractérisé en ce que lesdits moyens d'ancrage comprennent:
(e) un rebord, relié à un bord dudit organe mâle et définissant un certain nombre de premiers orifices espacés longitudinalement;
(f) un rail formant un U en coupe, relié solidairement à un bord de côté dudit organe femelle et engagé coulissant par ledit rebord, et définissant un certain nombre de seconds orifices espacés longitudinalement; et
(g) un cadenas ayant une branche insérée de façon amovible dans une paire en regard desdits premier et second orifices afin de verrouiller ledit rebord audit rail.

L'invention concerne également un dispositif de verrouillage destiné à être utilisé avec une poignée à levier allongée pour la commande d'une soupape du type installée radialement sur une conduite allongée d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle, définissant un corps principal allongé destiné à engager de façon amovible une portion substantielle de ladite poignée levier sur son long;
(b) un organe femelle, définissant un organe pochette allongé, généralement fermé, ledit organe pochette ayant une ouverture à une extrémité, ledit organe mâle et ladite poignée levier engagés de façon amovible l'un avec l'autre étant destinés à être engagés de façon amovible au travers ladite ouverture et dans ledit organe pochette afin de verrouiller ladite poignée levier audit organe mâle, de sorte que ladite poignée levier devienne généralement masquée par lesdits organes mâle et femelle reliés l'un à l'autre;
(c) des moyens visant à empêcher un mouvement relatif dudit organe mâle au niveau de ladite conduite; et
(d) des moyens visant à ancrer de façon amovible lesdits organes mâle et femelle exclusivement de ladite poignée levier;
caractérisé en ce que ledit dispositif de verrouillage empêche la rotation par pivotement de ladite poignée levier lorsque celle-ci est placée en l'une quelconque desdites première ou seconde positions;
et caractérisé en ce que les moyens mentionnés en premier consistent en une paroi en forme de U, installée transversalement à l'extrémité dudit corps principal d'organe mâle, ladite paroi en forme de U définissant deux pattes de côté sensiblement parallèles espacées l'une de l'autre par une distance au moins légèrement plus grande que le diamètre de ladite conduite de fluide, lesdites pattes de la paroi en forme de U étant au moins sensiblement plus longue que ledit diamètre de conduite de fluide. Préférablement, l'on prévoira en plus un organe de prolongement desdites pattes de côté, de ladite paroi en forme de U installée amovible, afin de s'ajuster à des conduites de fort diamètre.

Selon une troisième caractéristique de l'invention, l'on prévoit un dispositif de verrouillage destiné à être utilisé avec une poignée à levier allongée pour la commande d'une soupape du type installée radialement sur une conduite allongée d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle, définissant un corps principal allongé destiné à engager de façon amovible une portion substantielle de ladite poignée levier sur son long;
(b) un organe femelle, définissant un organe pochette allongé, généralement fermé, ledit organe pochette ayant une ouverture à une extrémité, ledit organe mâle et ladite poignée levier engagés de façon amovible l'un avec l'autre étant destinés à être engagés de façon amovible au travers ladite ouverture et dans ledit organe pochette afin de verrouiller ladite poignée levier audit organe mâle, de sorte que ladite poignée levier devienne généralement masquée par lesdits organes mâle et femelle reliés l'un à l'autre;
(c) des moyens visant à empêcher un mouvement relatif dudit organe mâle au niveau de ladite conduite; et
(d) des moyens visant à ancrer de façon amovible lesdits organes mâle et femelle exclusivement de ladite poignée levier;
caractérisé en ce que ledit dispositif de verrouillage empêche la rotation par pivotement de ladite poignée levier lorsque celle-ci est placée en l'une quelconque desdites première ou seconde positions;
caractérisé en ce que ledit organe mâle est de forme généralement en U, définissant une première patte de base et deux premières pattes de côté; ledit dispositif de verrouillage comprenant au surplus une plaque de coin, de forme en U en coupe et définissant une seconde patte de base et de secondes pattes de côté, ladite plaque de coin étant installée de façon amovible entre ladite poignée levier et ledit organe mâle afin de verrouiller ceux-ci à serre, ladite poignée levier étant de dimension relativement faible; ledit organe mâle définissant ainsi une paroi intérieure en forme de U d'une dimension sensiblement égale à celle de la paroi extérieure en forme de U définie par ladite plaque de coin; et caractérisé en ce que, pour une poignée levier relativement étroite, ladite seconde patte de base s'appuie directement sur ladite première patte de base et sur ladite poignée levier avec lesdites secondes pattes de côté s'allongeant librement dans une direction opposée à ladite première patte de base; ou en ce que, pour une poignée levier relativement mince, ladite seconde patte de base s'appuie directement sur ladite poignée levier seulement avec lesdites secondes pattes de côté s'allongeant en direction de ladite première patte de base en l'engageant par un bord.

### COURTE DESCRIPTION DES FIGURES DES DESSINS

Les figures 1-3 représentent des vues isométriques d'un segment de conduite à écoulement de liquide, comprenant une soupape intermédiaire à commande par levier, et suggérant comment une première réalisation du dispositif de verrouillage en deux parties de l'invention peut être installé séquentiellement sur le levier de soupape afin de le verrouiller en position transversale par rapport à la conduite, la figure 3 étant à échelle agrandie et montrant en plus un cadenas verrouillant les deux parties de ce dispositif de verrouillage;
La figure 4 est une vue en coupe longitudinale de la serrure de soupape de la figure 3;
la figure 4a est une vue semblable à celle de la figure 4, mais pour une seconde réalisation de serrure de soupape;
la figure 5 est une coupe selon la ligne 5-5 de la figure 4a;
la figure 6 est une vue semblable à la figure 3, mais montrant plutôt comment le levier de soupape peut être verrouillé en position allongée par rapport à la conduite;
la figure 7 est une vue isométrique éclatée d'un troisième modèle de serrure de levier à soupape, suggérant comment il peut être installé sur le levier de soupape transversal d'une conduite d'écoulement de fluide;

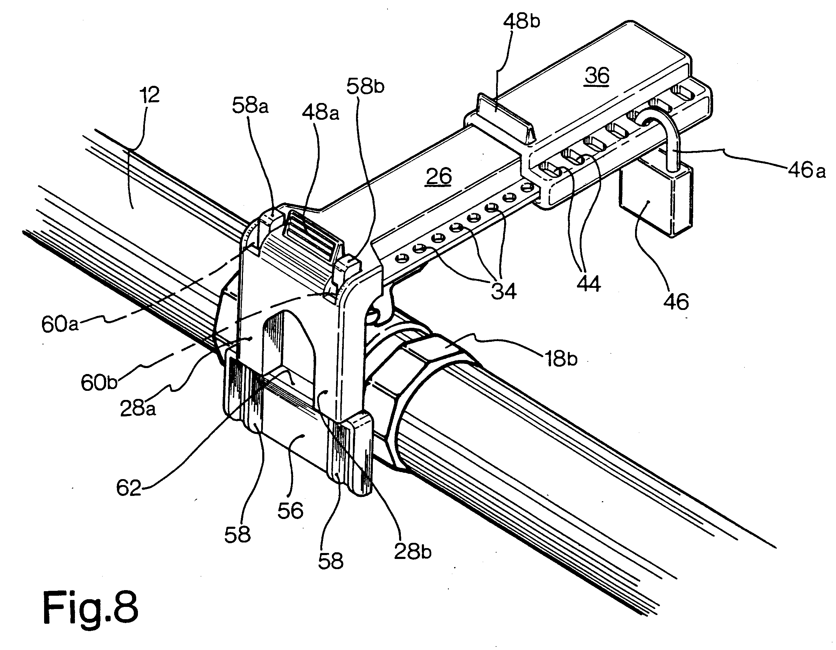

la figure 8 est une vue semblable à celle de la figure 7 mais dont la serrure est fixée de façon opérante au levier de soupape et cadenassée en position; et
les figures 9 et 10 sont des vues partielles en perspective de la plaque d'ajustement de manette installée à l'intérieur du dispositif de verrouillage de soupape afin de fixer deux poignées levier de soupape de formes différentes.

### DESCRIPTION DÉTAILLÉE DES RÉALISATIONS DE L'INVENTION

L'écoulement d'un fluide au travers la conduite cylindrique 12 est contrôlé par une soupape (non illustrée), installée dans le tronçon 12' de la conduite 12. Le tronçon de conduite 12' peut être une partie séparée de la conduite 12, dans quel cas une paire d'écrous annulaires espacés 18a, 18b verrouilleront par vissage le tronçon de conduite 12' aux deux demies de la conduite 12, de façon hermétique. Le clapet de soupape est porté pivotant dans le tronçon de conduite 12' par un boulon rotatif d'arbre 14, lequel fait saillie radialement vers l'extérieur de la conduite 12. Une poignée levier allongée, rigide 16 est portée transversalement de façon pivotante rotative par l'extrémité radiale extérieure de l'arbre de soupape 14, et retenue fixement à celui-ci par la tête 14a du boulon 14. Un manchon de plastique 16a peut s'installer sur la portion d'extrémité libre de la poignée levier 16, pour améliorer le confort lors de sa manipulation. L'extrémité intérieure 16b de la poignée levier 16 peut être légèrement pliée afin de décaler la manette 16a par rapport au plan de la conduite 12.

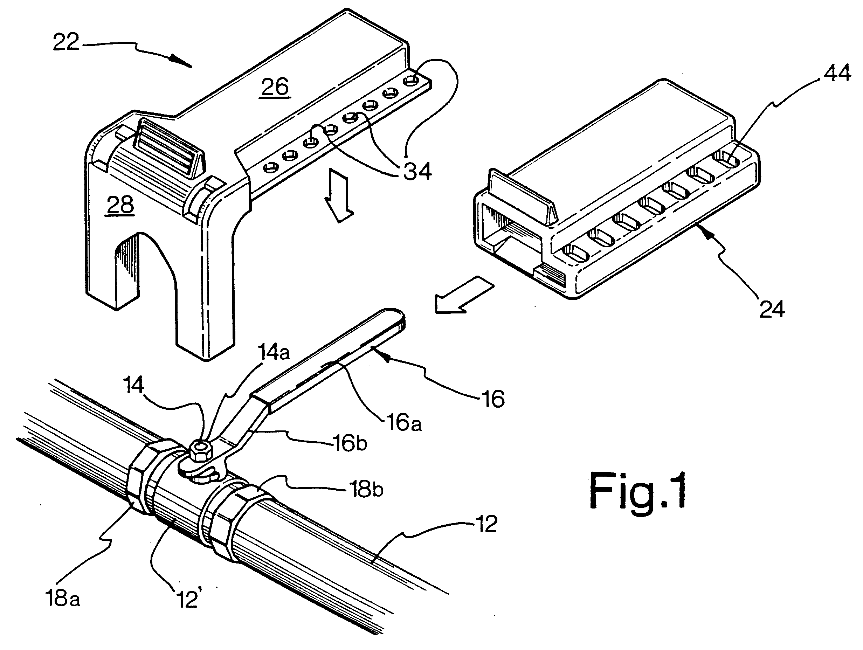

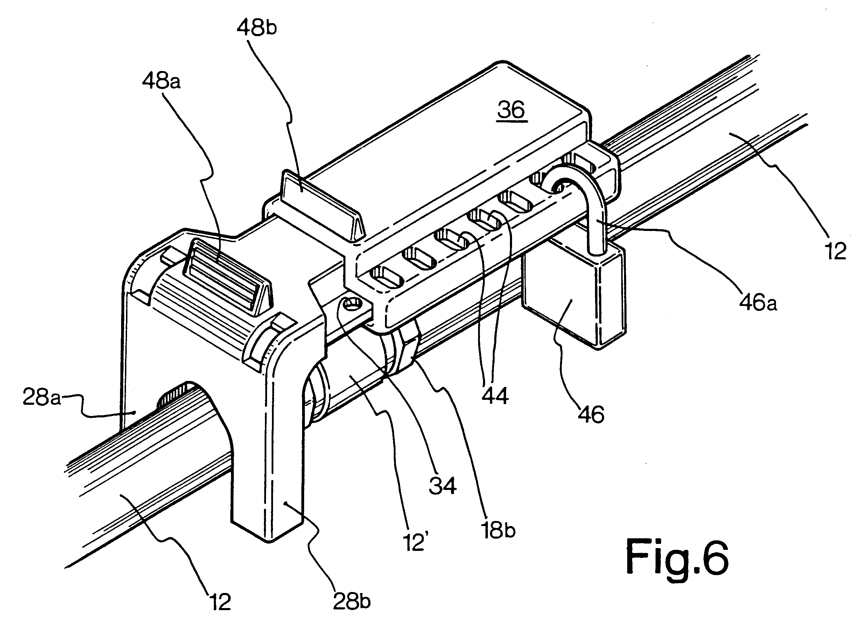

La poignée 16 est rotative avec l'arbre 14 entre une première position transversale à l'axe longitudinal de la conduite - figures 1-3 - jusqu'à une seconde position parallèle à et vis-à-vis la conduite 12 - figure 6. Dans la première position de la poignée 16, la soupape est habituellement fermée: son clapet discoïde plat traverse radialement le tronçon de conduite 12, empêchant ainsi l'écoulement de fluide au travers ce tronçon. Dans ladite seconde position de poignée 16, la soupape est alors ouverte: le plan de son corps plat s'allonge alors généralement parallèlement à l'axe longitudinal de la conduite 12, permettant ainsi au fluide de s'écouler sensiblement librement le long de la conduite 12.

Selon l'invention, l'on prévoit des moyens 20 pour verrouiller la poignée de commande de soupape, 16, dans l'une quelconque de sa première position (transversale) ou de sa seconde position (longitudinale). Les moyens de verrouillage 20 consistent en deux parties séparées conformées l'une à l'autre, nommément: une partie d'accouplement mâle 22, et une partie d'accouplement femelle 24.

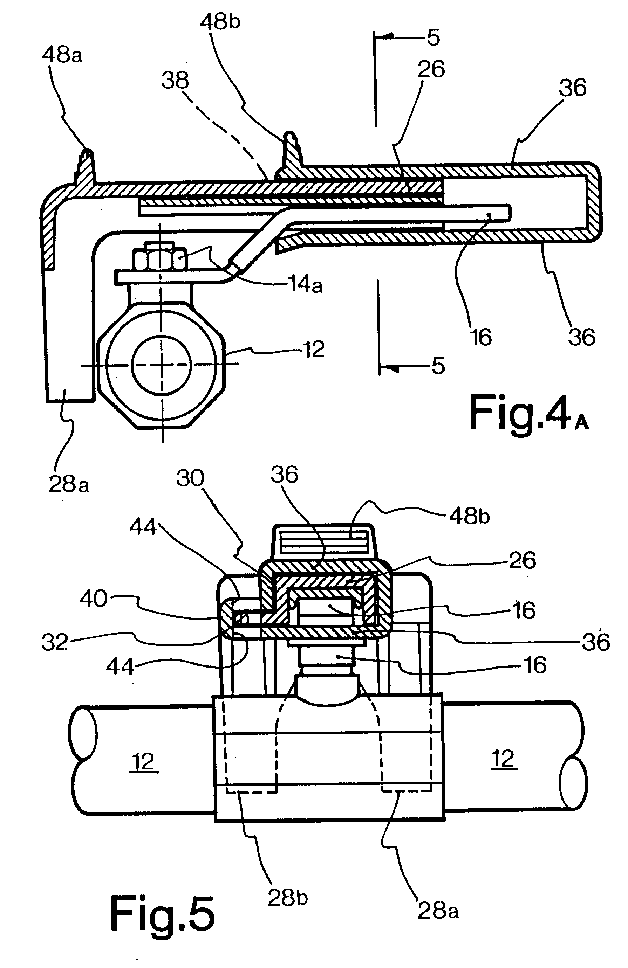

La partie d'accouplement mâle 22 définit une plaque allongée ou bras 26, ayant des rebords 26a, 26a de façon à former approximativement un U en coupe, et une butée 28 en forme de U, solidaire de l'extrémité du bras 26 et transversalement relié à celui-ci. La butée 28 est bien plus large que le bras 26, et celui-ci définit un canal allongé en forme de U, 30 (figure 5) bien plus large que la poignée levier 16 pour un engagement libre au-dessus de celle-ci. La longueur du bras 26 est telle que, lorsque le canal 30 engage à plat sur une portion substantielle de la poignée levier 16, la butée 28 s'allonge transversalement par rapport à la conduite 12 sur le côté opposé à la poignée levier 16. Les deux pattes 28a, 28b de la butée en forme de U, 28, sont espacées par une distance plus grande que le diamètre de la conduite 12. Ainsi, les pattes 28a, 28b peuvent s'engager sur des côtés opposés de la conduite, lorsque la poignée levier 16 est orientée parallèlement à la conduite 12 (figure 6) ou sur le même côté de la conduite 12 (figures 1-3) lorsque la poignée levier 16 est orientée transversalement par rapport à la conduite.

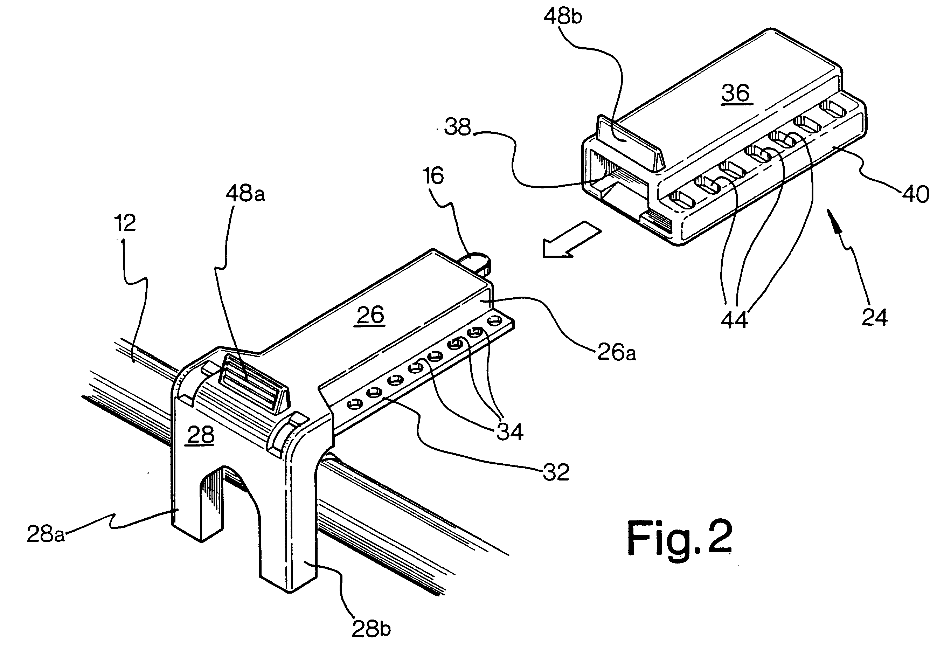

Les longueurs relatives du levier 16 et du bras 26 peuvent être telles que la pointe d'extrémité libre de la poignée levier 16 peut faire saillie vers l'extérieur à partir du canal de bras 30, tel que suggéré à la figure 2. Préférablement, les pattes de butée 28a, 28b seront espacées d'une distance sensiblement égale à la longueur du tronçon de conduite 12' comprenant les écrous filetés 18a, 18b, de sorte que ceux-ci puissent constituer des rails pour guider le déplacement des pattes butée 28a, 28b tangentiellement à la conduite 12, lorsque la poignée levier de verrouillage 16 occupe sa position transversale représentée à la figure 2. Préférablement, un rebord extérieur 32 ayant un certain nombre d'orifices 34 est réalisé solidaire d'un bord libre allongé du rebord 26a transversalement à celui-ci, dans un but détaillé plus bas.

La partie d'accouplement femelle 24 consiste en un boîtier allongé plat, 36, définissant une ouverture 38 permettant l'engagement d'une extrémité libre de la tige 26 y compris le rebord latéral de bordure 32. Le creux intérieur du boîtier 36 se conforme généralement à la forme extérieure de la tige y compris son rebord 32. Ainsi, la longueur du boîtier 36 devrait représenter au moins une portion substantielle de la longueur de la tige 26. Le boîtier 36 définit une portion 40 formant un U en coupe, et en prolongement de bordure, à être engagement sur son long par le rebord 32 de façon coulissante. Chacune des deux pattes se faisant face du boîtier en U 40 comprend un certain nombre d'orifices 44, destinés à venir vis-à-vis des orifices 34 de rebord de tige 32. Les orifices 44 de boîtier seront préférablement de plus fort diamètre que les orifices 34 de tige.

Tel que suggéré à la figure 3, en insérant la branche 46a d'un cadenas 46 au travers des orifices 34 et 44, le boîtier 36 et la tige 26 deviendront verrouillés. Conséquemment, la poignée levier 16 sera complètement masquée et inaccessible aux personnes non autorisées.

Dans la position transversale de la poignée levier 16 (figure 3), la butée 28 des organes verrouillés 26, 36 verrouillera fermement ces derniers en position transversale par rapport à la conduite 12, pour ainsi empêcher la rotation de la poignée levier 16, puisqu'une des faces extérieures des pattes 28a, 28b s'appuie tangentiellement sur le même côté de la conduite 12 opposée à la tige 26. De la même façon, dans la position axiale de la poignée levier 16 (figure 6), la butée 28 des organes verrouillés 26, 36 verrouilleront de nouveau fermement ceux-ci dans leur position axiale, - parallèle à et surplombant l'axe longitudinal de la conduite 12 - de façon à de nouveau empêcher la rotation de la poignée levier 16, puisque les faces intérieures des pattes 28a, 28b s'appuient tangentiellement sur les côtés opposés de la conduite 12. Donc, dans les deux cas, la soupape est verrouillée soit en position ouverte, soit en position fermée.

Préférablement, la paroi supérieure de la butée 28 comprend une patte 48a, et la paroi supérieure de boîtier 36 adjacente à l'ouverture 38 comprend aussi une patte 48b, pour faciliter la manipulation des parties de serrure de soupape 22 et 24.

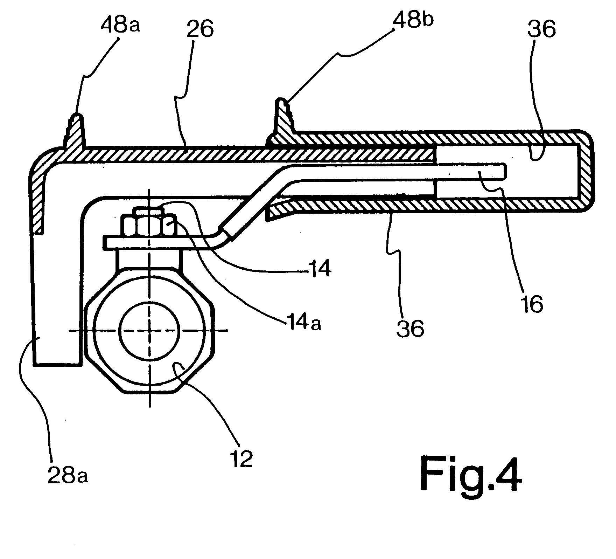

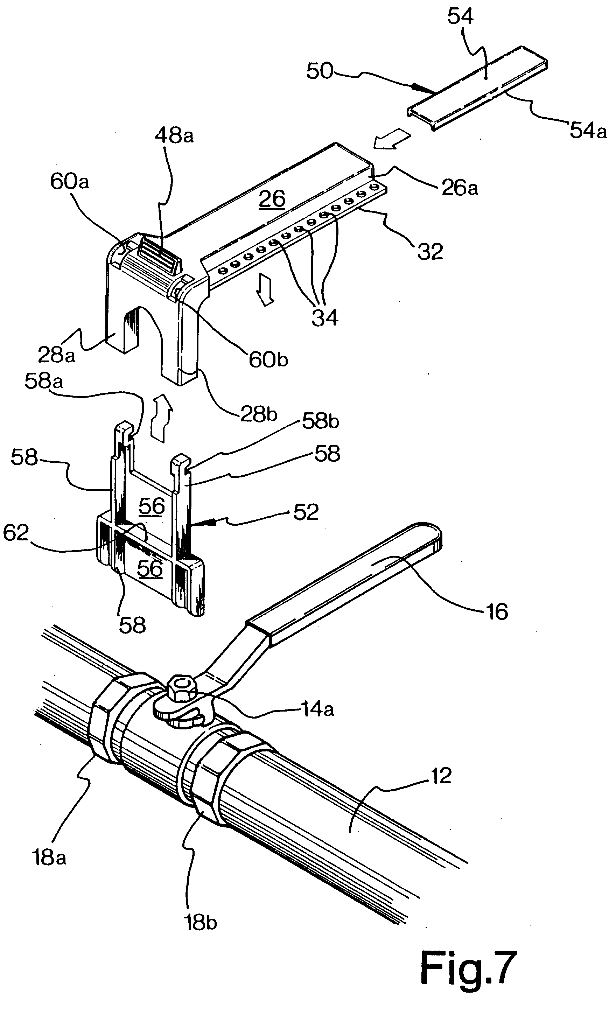

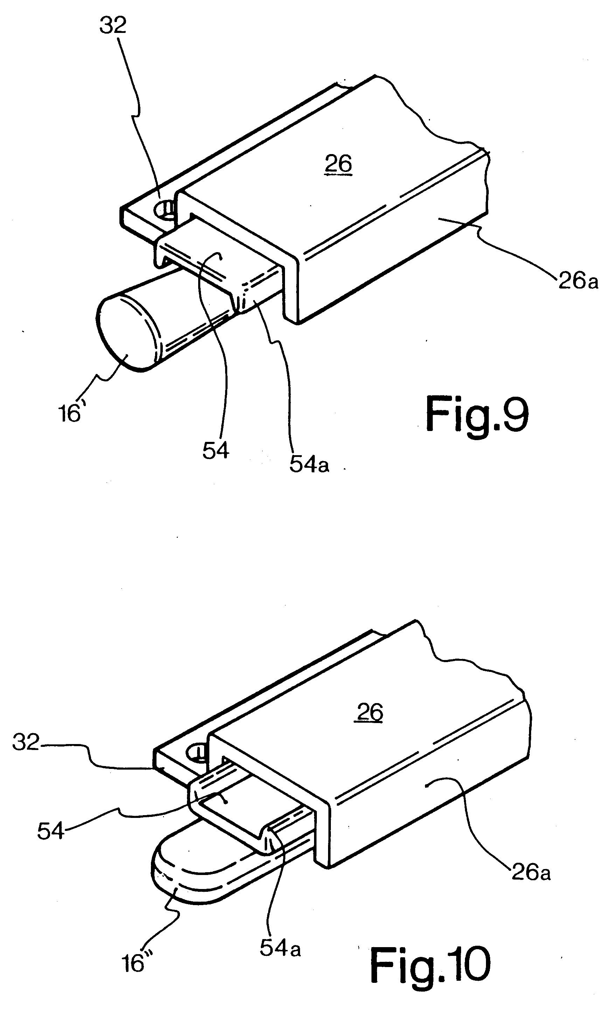

Préférablement, et tel qu'illustré aux figures 4a, 5 et 7, l'on prévoit des organes de rail 50, 52 pour immobiliser la manette 16 dans le canal de tige 36 et les pattes de butée 28a, 28b sur les anneaux 18a, 18b respectivement. L'organe de rail 50 définit une plaque rectangulaire plate, 54, ayant des rebords étroits 54a, 54a afin de constituer un U en coupe. Un rail d'ajustement 50 permet l'ancrage d'une poignée levier de soupape relativement étroite, 16' (figure 9) à l'intérieur du canal 38, en contraignant la plaque 54 à s'appuyer à plat sur la plaque 26 avec les rebords 54a, 54a orientés dans une direction opposée à la plaque 26. Selon un autre mode de l'invention, le rail 50 permettra également l'ancrage d'une poignée levier de soupape relativement mince, 16'' (figure 10) à l'intérieur du canal 38, en contraignant la plaque 54 à s'appuyer à plat sur la manette 16'' avec les rebords 54a, 54a s'appuyant par leur bord transversalement sur la plaque 26.

L'organe d'accouplement de rail 52 définit une plaque principale 56, avec deux pattes parallèles solidaires et en prolongement, 58, 58 engagées de façon amovible au travers les pattes 28a, 28b de la butée 28. L'extrémité intérieure de chaque patte de butée, 28a, 28b, comprend un orifice 60a, 60b. Les orifices 60a, 60b sont espacés les uns des autres par la même distance que les crochets 58a, 58b le sont les uns des autres, de façon à pouvoir s'accrocher les uns aux autres. Les pattes 58 sont rectangulaires et s'allongent transversalement par rapport au plan de la plaque 56 sur tout son long. En plus, l'on prévoit une autre patte 62 semblable aux pattes 58 transversalement à celles-ci, en une section intermédiaire de celles-ci. La patte 52 constitue un épaulement pour recevoir les extrémités libres des pattes de butée 28a, 28b, lorsque le crochet d'accouplement 58a, 58b s'engage dans les orifices de butée 60a, 60b.

## Revendications

1. Un dispositif de verrouillage destiné à être utilisé avec une poignée à levier allongée (16) pour la commande d'une soupape du type installée radialement sur une conduite allongée (12) d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle (22), définissant un corps principal allongé (26) destiné à engager de façon amovible une portion substantielle de ladite poignée levier (16) sur son long;
(b) un organe femelle (24), définissant un organe pochette allongé (36), généralement fermé, ledit organe pochette ayant une ouverture (38) à une extrémité, ledit organe mâle (22) et ladite poignée levier (16) engagés de façon amovible l'un avec l'autre étant destinés à être engagés de façon amovible au travers ladite ouverture (38) et dans ledit organe pochette afin de verrouiller ladite poignée levier (16) audit organe mâle (22), de sorte que ladite poignée levier devienne généralement masquée par lesdits organes mâle et femelle reliés l'un à l'autre;
(c) des moyens (28a, 28b, 18a, 18b) visant à empêcher un mouvement relatif dudit organe mâle (22) au niveau de ladite conduite (12); et
(d) des moyens (34, 44, 46) visant à ancrer de façon amovible lesdits organes mâle et femelle exclusivement de ladite poignée levier;
caractérisé en ce que ledit dispositif de verrouillage empêche la rotation par pivotement de ladite poignée levier (16) lorsque celle-ci est placée en l'une quelconque desdites première ou seconde positions;
et caractérisé en ce que lesdits moyens d'ancrage (34, 44, 46) comprennent:
(e) un rebord (32) , relié à un bord dudit organe mâle (26) et définissant un certain nombre de premiers orifices (34) espacés longitudinalement;
(f) un rail (40) formant un U en coupe, relié solidairement à un bord de côté dudit organe femelle (24) et engagé coulissant par ledit rebord (32), et définissant un certain nombre de seconds orifices (44) espacés longitudinalement; et
(g) un cadenas (46) ayant une branche (46a) insérée de façon amovible dans une paire en regard desdits premier et second orifices (34, 44) afin de verrouiller ledit rebord (32) audit rail (40).

2. Un dispositif de verrouillage destiné à être utilisé avec une poignée à levier allongée (16) pour la commande d'une soupape du type installée radialement sur une conduite allongée (12) d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle (22), définissant un corps principal allongé (26) destiné à engager de façon amovible une portion substantielle de ladite poignée levier (16) sur son long;
(b) un organe femelle (24), définissant un organe pochette allongé (36), généralement fermé, ledit organe pochette ayant une ouverture (38) à une extrémité, ledit organe mâle (22) et ladite poignée levier (16) engagés de façon amovible l'un avec l'autre étant destinés à être engagés de façon amovible au travers ladite ouverture (38) et dans ledit organe pochette afin de verrouiller ladite poignée levier (16) audit organe mâle (22), de sorte que ladite poignée levier devienne généralement masquée par lesdits organes mâle et femelle reliés l'un à l'autre;
(c) des moyens (18a, 18b) visant à empêcher un mouvement relatif dudit organe mâle (22) au niveau de ladite conduite (12); et
(d) des moyens (34, 44, 46) visant à ancrer de façon amovible lesdits organes mâle et femelle exclusivement de ladite poignée levier;
caractérisé en ce que ledit dispositif de verrouillage empêche la rotation par pivotement de ladite poignée levier (16) lorsque celle-ci est placée en l'une quelconque desdites première ou seconde positions;
et caractérisé en ce que les moyens mentionnés en premier (28a, 28b, 18a, 18b) consistent en une paroi en forme de U (28), installée transversalement à l'extrémité dudit corps principal d'organe mâle (22), ladite paroi en forme de U (28) définissant deux pattes de côté (28a, 28b) sensiblement parallèles espacées l'une de l'autre par une distance au moins légèrement plus grande que le diamètre de ladite conduite de fluide (12) , lesdites pattes (28a, 28b) de la paroi en forme de U étant au moins sensiblement plus longue que ledit diamètre de conduite de fluide.

3. Un dispositif de verrouillage destiné à être utilisé avec une poignée à levier allongée (16) pour la commande d'une soupape du type installée radialement sur une conduite allongée (12) d'écoulement de fluide permettant une rotation pivotante entre une première position, parallèle à et vis-à-vis ladite conduite, et une seconde position, transversale à ladite conduite; ledit dispositif de verrouillage étant constitué par ce qu'il suit:
(a) un organe mâle (22), définissant un corps principal allongé (26) destiné à engager de façon amovible une portion substantielle de ladite poignée levier (16) sur son long;
(b) un organe femelle (24), définissant un organe pochette allongé (36), généralement fermé, ledit organe pochette ayant une ouverture (38) à une extrémité, ledit organe mâle (22) et ladite poignée levier (16) engagés de façon amovible l'un avec l'autre étant destinés à être engagés de façon amovible au travers ladite ouverture (38) et dans ledit organe pochette afin de verrouiller ladite poignée levier (16) audit organe mâle (22), de sorte que ladite poignée levier devienne généralement masquée par lesdits organes mâle et femelle reliés l'un à l'autre;
(c) des moyens (18a, 18b) visant à empêcher un mouvement relatif dudit organe mâle (22) au niveau de ladite conduite (12); et
(d) des moyens (34, 44, 46) visant à ancrer de façon amovible lesdits organes mâle et femelle exclusivement de ladite poignée levier;
caractérisé en ce que ledit dispositif de verrouillage empêche la rotation par pivotement de ladite poignée levier (16) lorsque celle-ci est placée en l'une quelconque desdites première ou seconde positions;
caractérisé en ce que ledit organe mâle (22) est de forme généralement en U, définissant une première patte de base (26) et deux premières pattes de côté (26a, 26a); ledit dispositif de verrouillage comprenant au surplus une plaque de coin (50), de forme en U en coupe et définissant une seconde patte de base (54) et de secondes pattes de côté (54a), ladite plaque de coin (50) étant installée de façon amovible entre ladite poignée levier (16) et ledit organe mâle (22) afin de verrouiller ceux-ci à serre, ladite poignée levier étant de dimension relativement faible; ledit organe mâle définissant ainsi une paroi intérieure en forme de U d'une dimension sensiblement égale à celle de la paroi extérieure en forme de U définie par ladite plaque de coin; et caractérisé en ce que, pour une poignée levier relativement étroite, ladite seconde patte de base (54) s'appuie directement sur ladite première patte de base (26) et sur ladite poignée levier (16) avec lesdites secondes pattes de côté (54a) s'allongeant librement dans une direction opposée à ladite première patte de base (26); ou en ce que, pour une poignée levier (16) relativement mince, ladite seconde patte de base (54) s'appuie directement sur ladite poignée levier (16) seulement avec lesdites secondes pattes de côté (54a) s'allongeant en direction de ladite première patte de base (26) en l'engageant par un bord.

4. Un dispositif de verrouillage tel que défini à la revendication 2,
comprenant au surplus un organe de prolongement (56) desdites pattes de côté (28a, 28b), de ladite paroi en forme de U (28) installée amovible, afin de s'ajuster à des conduites (12) de fort diamètre.
